# EUROPEAN PATENT APPLICATION

(11) **EP 0 598 584 A1**
(43) Date of publication of application: **25.05.1994**
(21) Application number: 93309115.9
(22) Date of filing: 15.11.1993
(51) Int. Cl.: H04N 1/00

(54) **Apparatus for scanning more than one input medium**

(30) Priority: 19.11.1992 IL 10380192
(71) Applicant: SCITEX CORPORATION LTD., Herzliya 46103 (IL)
(72) Inventor: Yannai, Moshe, Alfei Menashe 44851 (IL); Cohen, Ronny, Binyamina 30550 (IL); Drory, Hanan, Ra'anana 43580 (IL); Shalev, Eli, Kfar Saba 44450 (IL)
(74) Representative: Hillier, Peter

(57) **Abstract**

Apparatus for sequentially providing a scanner, having a scanning location, with a plurality of cassettes. The apparatus includes apparatus for storing the plurality of cassettes in designated locations and apparatus for moving a desired cassette between its designated location in the apparatus for storing and the scanning location of the scanner.

## Description

### FIELD OF THE INVENTION

The present invention relates generally to workpiece providing systems and to cassette providing systems for scanners in particular.

### BACKGROUND OF THE INVENTION

An operator operating a prior art scanner loads an input medium to be scanned by placing the medium into a cassette and loading the cassette into the scanner. The scanner scans the medium, producing thereby a digital representation (image) of the medium, after which the operator removes the medium. If desired, the operator can then place another input medium to be scanned into the scanner.

In scanners which enable the operator to modify the image of the medium, the scanning and image modification operations are typically foreground operations. Therefore, image modification can not occur during scanning and vice versa.

There also exist scanners onto which a multiplicity of input media can be mounted, for example, on the surface of a drum scanner or on the scanning table of a flat bed scanner.

In these scanners, a user must indicate to a host computer the location and size of each input medium. One indication method involves physically pointing to the input medium on the scanning surface with an electronic light pen or a movable magnifying glass having a cross indication on it.

Alternatively, a low resolution scan of the input medium is performed and displayed on a monitor. A mouse or other cursor device is utilized to indicate the location.

### SUMMARY OF THE INVENTION

It is an object of the present invention to provide apparatus for automatic loading of a plurality of cassettes into a scanner.

It is a further object of the present invention to provide apparatus for scanning and modifying images at one time.

It is a still further object of the present invention to provide apparatus for a plurality of users to utilize a single scanner.

It is a further object of the present invention to provide apparatus and method for automatically determining the location and scanning area of each of a multiplicity of input media placed on a scanning surface and for utilizing the location and size information for scanning each of the input media.

There is therefore provided, in accordance with an embodiment of the present invention, apparatus for sequentially providing a scanner, having a scanning location, with a plurality of cassettes. The apparatus includes apparatus for storing the plurality of cassettes in designated locations and apparatus for moving a desired cassette between its designated location in the apparatus for storing and the scanning location of the scanner.

There is also provided, in accordance with an embodiment of the present invention, apparatus for automatically scanning a plurality of input media. The apparatus includes a) a scanner having a scanning location, b) apparatus for storing a plurality of cassettes in designated locations, wherein in each cassette is located one of the plurality of input media and c) apparatus for moving a desired cassette between its designated location in the apparatus for storing and the scanning location of the scanner, wherein the scanner scans the input medium when the cassette is located in the scanning location.

Additionally, in accordance with an embodiment of the present invention, the apparatus for storing includes at least one magazine.

Moreover, in accordance with an embodiment of the present invention, the apparatus for moving include motion apparatus and apparatus for gripping the desired cassette. The apparatus for gripping preferably includes a finger and each cassette includes a gripping indentation into which the finger is moved during gripping.

Further, in accordance with an embodiment of the present invention, the motion apparatus moves the cassette to a scan feed slot forming part of the scanner and the apparatus for moving additionally includes apparatus for feeding the desired cassette from the scan feed slot to the scanning location.

Still further, in accordance with an embodiment of the present invention, each cassette includes apparatus for identifying size and type of the input medium and whether or not rotation of the input medium is desired.

Additionally, in accordance with an embodiment of the present invention, the apparatus for storing includes apparatus for identifying a user utilizing the apparatus for storing.

There is additionally provided, in accordance with an embodiment of the present invention, apparatus for scanning while performing image modification. The apparatus includes a) a scanner for scanning at least a first input medium and for producing a first digital representation thereof, the first input medium being one of a plurality of input media, b) apparatus for storing the first digital representation along with other previously scanned digital representations, c) apparatus for modifying at least the first digital representation while the scanner scans a second one of the plurality of input media and d) control apparatus for controlling the scanner, including indicating to the scanner to rescan the first input medium after the second input medium was scanned, without requiring a user, at the time of the rescan, to manually provide the first input medium to the scanner.

Moreover, in accordance with an embodiment of the present invention, the apparatus for scanning includes apparatus for providing at least one input medium from a plurality of input media to and from the scanning apparatus. Alternatively, in accordance with a second preferred embodiment of the present invention, the plurality of input media are mounted on a scanning surface of the scanning apparatus. In accordance with a third embodiment of the present invention, a plurality of input media are mounted on a cassette.

Additionally, in accordance with the second preferred embodiment of the present invention, the scanning apparatus is operative to scan at least a portion of the scanning surface on which is mounted at least one of the input media and the scanning apparatus includes apparatus for automatically determining a location and size of those input media mounted within the portion of the scanning surface.

Further, in accordance with the second preferred embodiment of the present invention, the apparatus for automatically determining operates on data received from detectors forming part of the scanning apparatus.

Still further, in accordance with the second preferred embodiment of the present invention, the plurality of input media are located in predetermined locations on the scanning surface.

There is further provided, in accordance with a preferred embodiment of the present invention, apparatus for scanning more than one input medium mounted on a scanning surface or on a cassette. The apparatus includes a) a scanner for scanning at least a portion of the scanning surface, or cassette and b) a processor for automatically determining a location and size of those input media mounted within the portion of the scanning surface, wherein the scanner is operative to produce digital representations of the input media.

Additionally, in accordance with a preferred embodiment of the present invention, the apparatus for scanning more than one input medium includes apparatus for storing the digital representations along with other previously scanned digital representations and apparatus for modifying one of the previously scanned digital representations while the scanning apparatus operates.

There is still further provided, in accordance with a preferred embodiment of the present invention, a method for scanning while performing image modification. The method includes the steps of a) scanning at least a first input medium with a scanner and producing digital representations thereof, the first input medium being one of a plurality of input media, b) storing the first digital representation along with other previously scanned digital representations, c) modifying at least the first digital representation while the scanner scans a second one of the plurality of input media and d) indicating to the scanner to rescan the first input medium after the second input medium was scanned, without requiring a user, at the time of the rescan, to manually provide the first input medium to the scanner.

Additionally, in accordance with a preferred embodiment of the present invention, the plurality of input media are mounted on a scanning surface of the scanning apparatus. Alternatively, the at least one input medium is located within one of a plurality of cassettes.

There is further provided, in accordance with an embodiment of the present invention, apparatus for scanning utilizable by more than one user. The apparatus includes a) apparatus for storing a plurality of input media, b) apparatus for identifying the apparatus for storing as storing input media of a predetermined user, c) scanning apparatus for scanning a single input medium and d) apparatus for providing the single input medium to and from the scanning apparatus.

Additionally, in accordance with an embodiment of the present invention, the apparatus for storing includes at least one magazine.

Further, in accordance with an embodiment of the present invention, the apparatus for providing includes three-axis motion apparatus and apparatus for gripping a cassette storing the single input medium.

Still further, in accordance with an embodiment of the present invention, the apparatus for gripping includes a finger and each cassette includes a gripping indentation into which the finger is moved during gripping.

Moreover, in accordance with an embodiment of the present invention, the motion apparatus moves the cassette to a scan feed slot forming part of the scanner and the apparatus for moving additionally include apparatus for feeding the desired cassette from the scan feed slot to the scanning location.

Finally, there is also provided, in accordance with an embodiment of the present invention, a cassette for holding a picture to be scanned by a scanner. The cassette includes a) a housing and b) apparatus for identifying size and type of the picture and whether or not rotation of the picture, within the scanner, is desired.

### BRIEF DESCRIPTION OF THE DRAWINGS

The present invention will be understood and appreciated more fully from the following detailed description taken in conjunction with the drawings in which:
Fig. 1 is a schematic illustration of a scanner and an automatic cassette loading mechanism associated therewith, constructed and operative in accordance with an embodiment of the present invention;
Fig. 2 is a schematic illustration of a cassette feeding mechanism useful in the scanner of Fig. 1;
Fig. 3 is a schematic illustration of a cassette magazine useful in the mechanism of Fig. 1;
Fig. 4A is a schematic illustration of a cassette and a gripping mechanism useful in the mechanism of Fig. 1;
Fig. 4B is a schematic illustration of a portion of Fig. 4A, as marked by the circle 4B on Fig. 4A;
Fig. 5 is a block diagram illustration of apparatus for simultaneously scanning an input medium to produce a digital image and modifying an already scanned image forming part of the scanner of Fig. 1;
Fig. 6 is a block diagram illustration of a plurality of user workstations accessing a single scanner;
Figs. 7A and 7B are schematic illustrations of an alternative embodiment of the present invention in which a plurality of input media are placed on the scanning surface of flat bed and drum scanners, respectively;
Fig. 8A is a schematic illustration of a scanning operation scanning a single input medium;
Figs. 8B and 8C are graphical illustration of output produced when scanning only the scanning surface of Fig. 8A, and a line of the input medium of Fig. 8A, respectively;
Fig. 9 is a schematic illustration of an input medium placed on the scanning surface at an angle to the scanning direction;
Fig. 10A is a schematic illustration of a scanning operation scanning more than one input medium;
Figs. 10B and 10C are graphical illustration of output produced when scanning only one of the input media of Fig. 10A, and when scanning two of the input media of Fig. 10A, respectively; and
Fig. 11 is a schematic illustration of jobsheets useful in placing a plurality of input media on a scanning surface.

### DETAILED DESCRIPTION OF PRESENT INVENTION

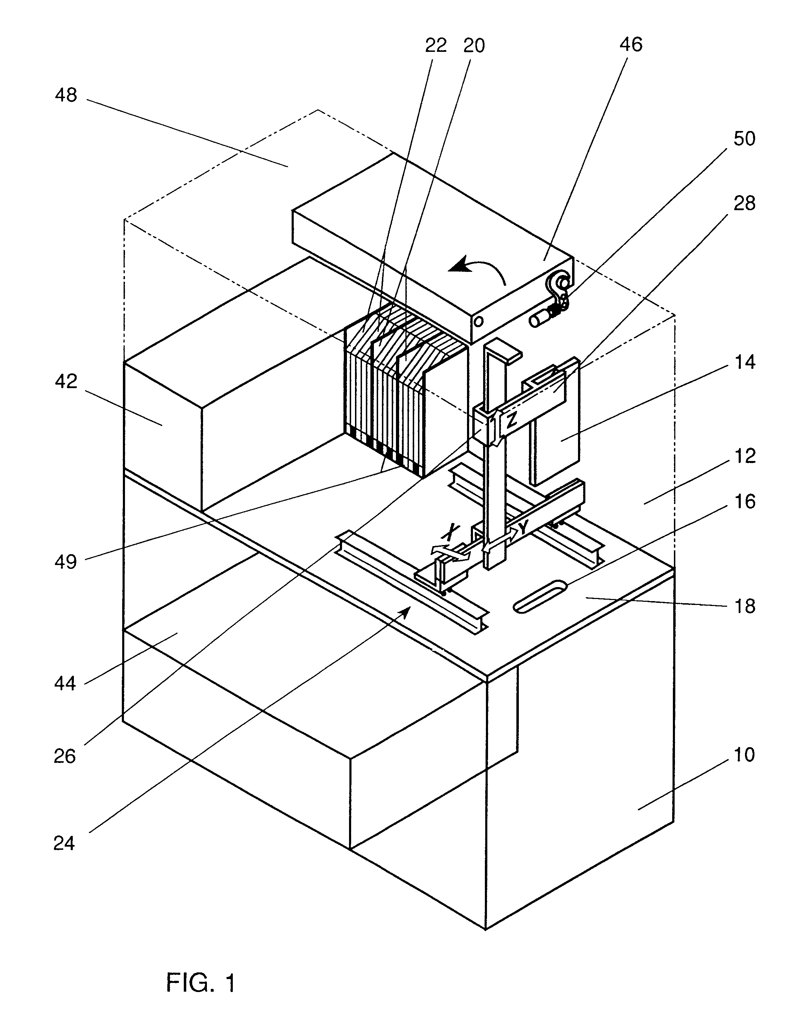

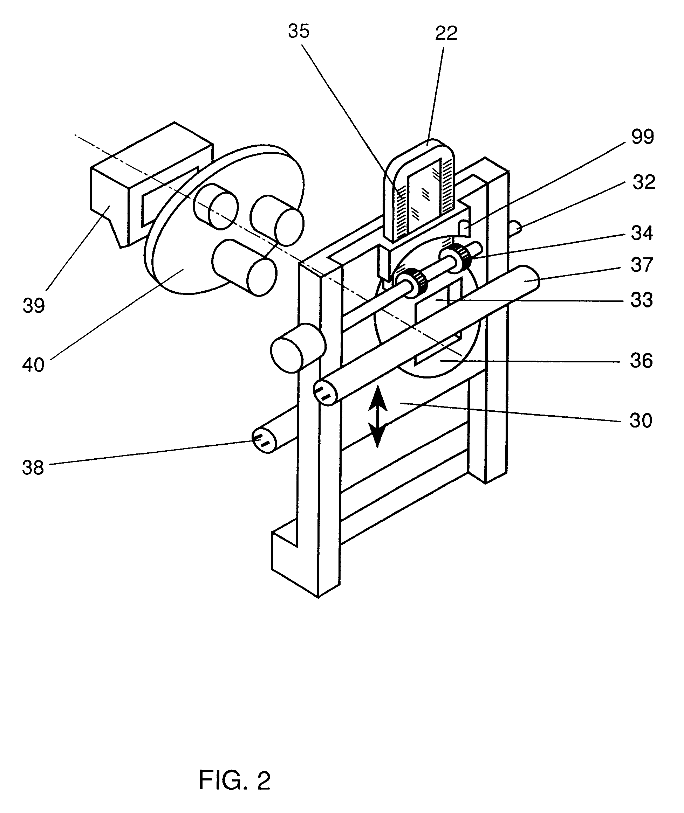

Reference is now made to Figs. 1 and 2. Fig. 1 illustrates a scanner 10, such as any suitable type of color separation scanner, and an automatic cassette loading mechanism 12 for storing and selectively loading a plurality of input media to be scanned. Fig. 2 illustrates a cassette feeding mechanism operating in conjunction with the light path of the scanner 10.

The automatic cassette loading mechanism 12 is similar in operation to the many types of workpiece providing systems known in the art. Workpiece providing systems are systems which provide one workpiece from among a plurality of prepared workpieces to a machine which subsequently operates on the workpiece.

For example, slide projectors, which sequentially illuminate a plurality of slides, typically include a loading tray in which the plurality of slides are loaded and a providing system for selecting a first slide to be illuminated, for returning the first slide to the loading tray after illumination and for selecting the next slide, consecutive with the first slide, for illumination.

The automatic cassette loading mechanism 12 of the present invention can either sequentially provide prepared cassettes, or it can provide the cassettes in any desired order.

Fig. 1 illustrates an exemplary embodiment of the present invention, where the scanner 10 receives cassettes 14 through a scanner feed slot 16 located at one side 18 of the scanner 10 and scans the cassettes by moving them up and down. It will be understood that the principles of the present invention can be applied to any type of scanner 10, including scanners which move the cassettes horizontally. Such a horizontal cassette translating scanner is the Smart Scanner manufactured by Scitex Corporation Ltd. of Herzlia, Israel, the assignees of the present invention.

The exemplary loading mechanism 12 typically comprises a first plurality of cassette magazines 20 each storing a second plurality of cassettes 22 and a cassette transfer mechanism 24 for transferring a single cassette 22 from its location within a cassette magazine 20 to the scanner feed slot 16 and vice versa.

The cassette transfer mechanism 24 typically comprises a three-axis translation mechanism 26 to which is attached a gripper 28.

The three-axis translation mechanism 26 moves in an X direction along the magazines 20 until reaching the location of a selected cassette 22, along a Y direction towards or away from the selected cassette 22, and along a Z direction to pick up the cassette 22 and to place it into the scanner feed slot 16.

The gripper 28 can be any suitable gripping mechanism, such as claws which open and close or an electromagnetic gripper.Whatever type of gripper 28 is utilized, the gripper 28 must grip and release the cassette 22 upon command. The cassette transfer mechanism 24 must be designed so as to accurately place the cassette 22 in both the scanner feed slot 16 and in its proper location within the magazine 20.

For a horizontal feeding scanner, the loading mechanism 12 can be placed beside the scanner 10 and the translation mechanism 26 can include an additional rotation axis for rotating the gripped cassette into an horizontal position. The scan feed slot 16, in this embodiment, is horizontally placed.

The scan feed slot 16 is typically associated with cassette movement apparatus 30 (Fig. 2) forming part of scanner 10. To accommodate the cassette loading mechanism 12, the cassette movement apparatus 30 of the scanner 10 includes a cassette feeding mechanism 32 for feeding the cassette into a scanning location 33 of apparatus 30.

In the exemplary embodiment, the cassette feeding mechanism 32 comprises two rotatable pinions (or gears) 34 which engage a "rack" 35 forming part of the cassette 22 once the cassette transfer mechanism 24 places the cassette 22 into the scan feed slot 16. Other feeding mechanisms can be optionally utilized.

The scanner 10 shown in Fig. 2 typically comprises a cassette rotating mechanism 36 for enabling the input medium to be scanned in a plurality of rotation angles and two lamps 37 and 38 for illuminating the input medium. Lamp 37 is operative for transparencies and lamp 38 is operative for reflectives.

Also shown in Fig. 2 are an optical head 39 comprising a plurality of detectors and a lens mechanism 40 for providing a plurality of magnification levels.

Returning to Fig. 1, a control unit 42, forming part of the mechanism 12, controls the operation of the mechanism 12. The control unit 42 typically is under control of and in communication with a control unit 44 controlling the scanner 10.

The automatic cassette loading mechanism 12 is utilized as follows:
a) The scanner operator opens a door 46 of a housing 48 of the mechanism 12 and places one magazine 20 filled with cassettes 22 into an appropriate vacant location therewithin. The magazine 20 is typically provided with means for user identification, such as a bar code 49.
b) At the appropriate time, the scanner 10 commands the mechanism 12 to load a selected cassette 22 into the scanner, where the selected cassette 22 is identified by the means for user identification and by its location within the magazine 20 and the identification information is read by an appropriate sensor (not shown).
c) If, as detected by a proximity sensor (not shown), the selected cassette 22 is not available (i.e. the slot in the magazine 20 in which the cassette 22 belongs is empty), the mechanism 12 so informs the scanner 10 and waits for further instructions. Otherwise, the mechanism removes the selected cassette 22 from the magazine 20, places it into the scan feed slot 16 and informs the scanner 10 that the loading operation is complete.
d) The feeding mechanism 32 feeds the selected cassette 22 towards the scanning location 33 of the cassette movement apparatus 30.
e) The scanner 10 performs its scanning operations.
f) The scanner 10, upon finishing its operations, commands the feeding mechanism 32 to remove the selected cassette and commands the mechanism 12 to return the cassette 22 to its original position. If the location is not empty, as identified by the proximity sensor, the mechanism 12 so informs the scanner 10 and waits for instructions.

In accordance with this exemplary embodiment of the present invention, the mechanism 12 also includes means 50, such as a solenoid actuated hook, for locking the door 46 during loading and for indicating when the door 46 is open. The control unit 42 typically does not allow the cassette transfer mechanism 24 to operate when the door 46 is open.

The mechanism 12 can also include sensors (not shown) for sensing the presence of a magazine. The output of the sensors is utilized to prevent the cassette transfer mechanism 24 from accessing a magazine location if no magazine 20 is present and to prevent cassettes 22 being loaded into a magazine 20 if the magazine 20 is located within the mechanism 12.

It will be appreciated that the mechanism 12 can be utilized for a multiplicity of users. Each user can be given a magazine 20, having thereon his user identification code, which can be filled with his cassettes 22, or, if there are more users than magazines 20, each user can be given a position within a coded magazine 20. The scanner 10 can then scan the cassettes 22 whenever it is ready to do so.

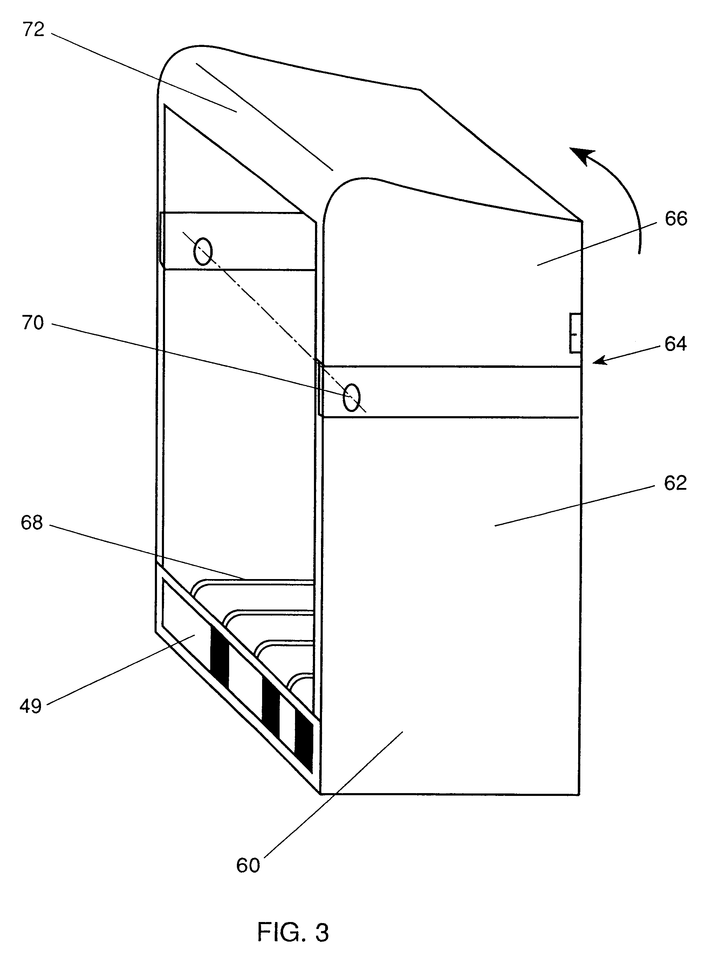

Reference is now made to Fig. 3 which illustrates one embodiment of a magazine, labeled 60, useful in the automatic cassette loading mechanism 12.

The magazine 60 typically is a rectangular cube open in the front for access by the cassette transfer mechanism 24. The magazine 60 comprises two sides 62, a back 64 and a rotating cover 66.

The magazine also typically comprises a multiplicity of separators 68 for supporting the multiplicity of cassettes 22 placed within the magazine 60. The cover 66 rotates about an axis 70 in order to remove the cover 66 and enable a user to place prepared cassettes into the magazine 60. The cover 66 can be shaped to include a handle 72 for carrying the magazine 60.

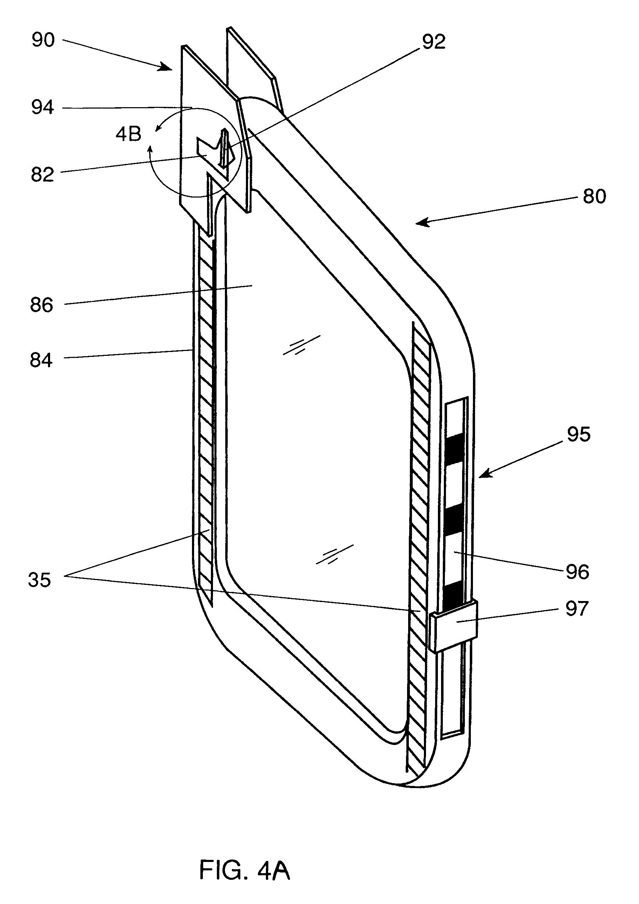

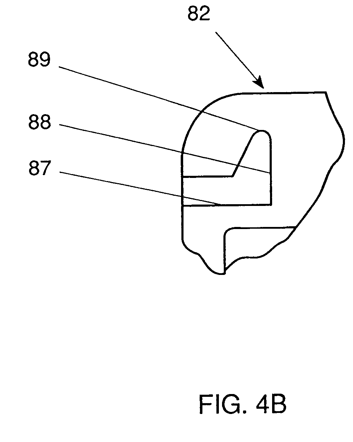

Reference is now made to Fig. 4 which schematically illustrates a cassette, labeled 80, having a gripping indentation 82. The cassette 30 comprises a frame 84 housing at least one piece of glass 86. In accordance with an embodiment of the present invention, the gripping indentation 82 is located in an upper corner of the frame 84.

The gripping indentation 82 is typically generally L-shaped having a long part 87 and a short part 88 which ends in a rounded tip 89. It is useful in conjunction with a gripper 90 formed of a finger 92 attached perpendicularly to a flat plate 94.

Included on a side of the cassette 80 is a means 94 for picture size and type identification. In this embodiment, the means is formed of a bar code 96 and a slider 97 covering a portion 98 of the bar code 96.

Bar code 96 indicates the type (reflective or transparency) and size of the input medium. The presence or absence of portion 98, created by the sliding of slider 97, indicates whether or not the cassette is to be rotated by rotating mechanism 36.

Referring briefly to Fig. 2, there is shown a identification reader 99 which reads the means for identification 94 and provides the identification information to the control unit 44.

The cassette transfer mechanism 24 typically moves the gripper 90 along the Y axis along a line defined by the long part 87 of the gripping indentation 82. The finger 92 is brought into the gripping indentation until reaching the short part 88, at which point, mechanism 24 raises the gripper 90 until reaching the rounded tip 89. In this position, the cassette 80 is "gripped" and can be removed.

Upon bringing the cassette 80 to the scan feed slot 16, the mechanism 24 lowers the cassette 80 with gripper 90 until the pinions 35 engage the gears 34. The cassette 80 is now in place.

The mechanism 24 continues to lower the gripper 90 until finger 92 reaches the long part 87 of the gripper indentation 82 at which point, the mechanism 24 backs the finger 92 out of the long part 87. Once free of the gripper indentation 82, the mechanism 24 moves the gripper 90 away from the scan feed slot 16.

The cassette 80 has now been placed into the scan feed slot 16. As mentioned hereinabove, once the cassette 80 has been placed, the cassette feeding mechanism 32 loads it into the scanning location 33.

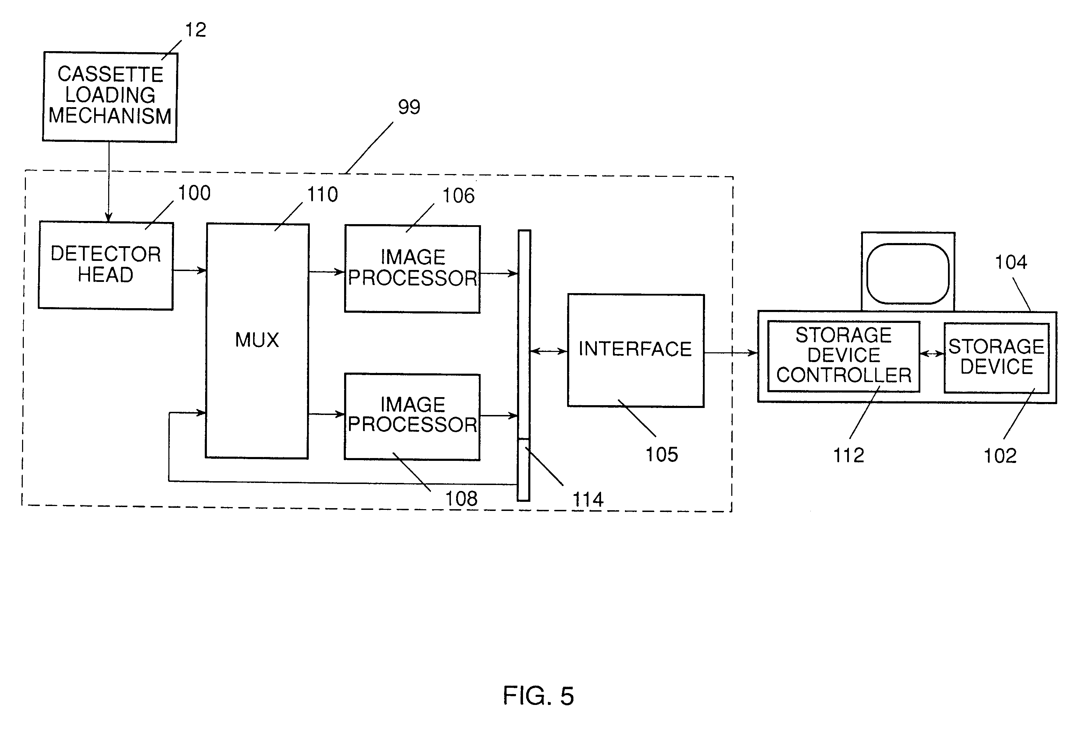

Reference is now made to Fig. 5 which illustrates apparatus 99, forming part of scanner 10, for simultaneously scanning an input medium and for modifying an already scanned digital image forming part of the scanner 10. The apparatus 99 is typically useful for scanners which pre-scan an input medium, store the pre-scanned image, provide the pre-scanned image to the operator for modification and then rescan the input medium using the modification instructions of the operator. In such scanners, the pre-scan is typically at a first resolution which is typically lower than a second, final scan resolution.

As in standard scanners, scanner 10 comprises a detector head and its drivers 100, such as those utilized in the Smart Scanner, for scanning an input medium.

Scanner 10 is typically associated with a host computer 104, such as a Whisper computer manufactured by Scitex Corporation Ltd. or a computer manufactured by Sun Microsystems Inc. of the U.S.A.. The host computer 104 typically comprises a storage device 102, such as a hard disk, which typically stores a digital representation (image) of the input medium as produced by the detector head 100. The host computer 104 typically modifies an already scanned image stored in storage device 102 according to user commands.

An interface 105, such as a small computer standard interface (SCSI) unit 503C34200S commercially available from Scitex Corporation Ltd., typically provides communication between scanner 10 and host computer 104.

The apparatus 99 typically comprises two image processors 106 and 108, such as the BIP 503D27202 and its associated buffering circuitry manufactured by Scitex Corporation Ltd., for processing the image in near real-time, thereby enabling near real-time modification of the image. Image processors 106 and 108 can, alternatively, be implemented in software on the host computer 104.

A multiplexer (MUX) 110, connected between the image processors 106 and 108 and the detector head 100, selects which output from units 100 and 104 is processed by which image processor 106 or 108.

Through the operation of the two image processors 106 and 108, the apparatus 99 simultaneously scans in data from said input medium while enabling an operator, operating on the host computer 104 to modify an already scanned image.

Typically, one image processor, for example processor 108, is optimized for scanning the data and the other, processor 106, is optimized for manipulations by the operator. If the operator desires, he can choose to perform the manipulations with the other processor, processor 108, by so indicating to MUX 110.

A storage device controller 112, such as the MDC 503D23284 manufactured by Scitex Corporation Ltd., arbitrates, or time shares, (under supervision of the host computer 104) among the image processors 106 and 108 and the host computer 104 as they access storage device 102 via a system bus 114.

It will be appreciated that, as long as there are cassettes waiting to be scanned, the cassette loading mechanism 12 can continually provide an input medium to the detector head 100 and therefore, the detector head 100 can continually provide data to the image processor, for example processor 108, to which it is connected.

Therefore, the storage device controller 112 typically provides the image processor, for example processor 106, which is currently connected to the host computer 104 and operating on the already scanned image with higher priority access to storage device 102 over the image processor 108.

It will be appreciated that the apparatus 99 enables the scanning operations to be performed as a background process. The scanner 10 can pre-scan a first input medium and provide it to the operator for modification while pre-scanning the remaining input media stored in the cassettes of the cassette loading mechanism 12.

Once the operator has finished modifying the image of the first input medium, the scanner 10 can either stop pre-scanning (if it has not already finished pre-scanning the entirety of input media) and immediately rescan the first input medium or it can finish the pre-scanning and only then rescan the input media for whom the operator has finished providing modification instructions. While the scanning continues, the operator can work on any of the images which the scanner 10 has finished pre-scanning.

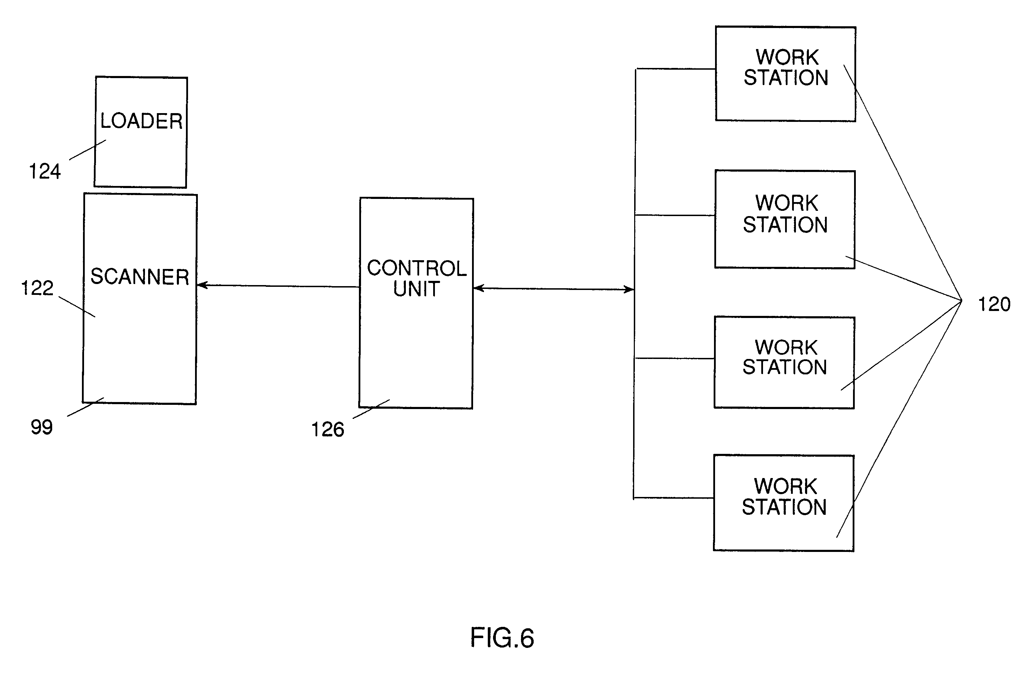

Reference is now made to Fig. 6 which illustrates a plurality of user workstations 120 operating with one scanner, labeled 122, which includes the apparatus 99 (Fig. 5) and has associated therewith one automatic cassette loading mechanism, labeled 124.

In the illustrated system, the workstations 120 are connected in parallel through a control unit 126, such as the SFL Router 501R32320 control unit manufactured by Scitex Corporation Ltd., to the scanner 122.

A user operating one of the workstations 120 provides his magazine 20 of cassettes 22 to the mechanism 124 and returns to his workstation 120. From his workstation, he can then request, through the control unit 126, that the scanner pre-scan or scan an input medium in his magazine.

The scanner identifies the magazine 20 belonging to the operator through the identification means 49, and, if nothing else has been requested, begins the requested scan. Otherwise, the requested scan is placed in a scan queue and scanned at the appropriate time.

The apparatus 99 ensures that the scan queue is scanned in the background while the operator, or operators, access and modify already scanned images.

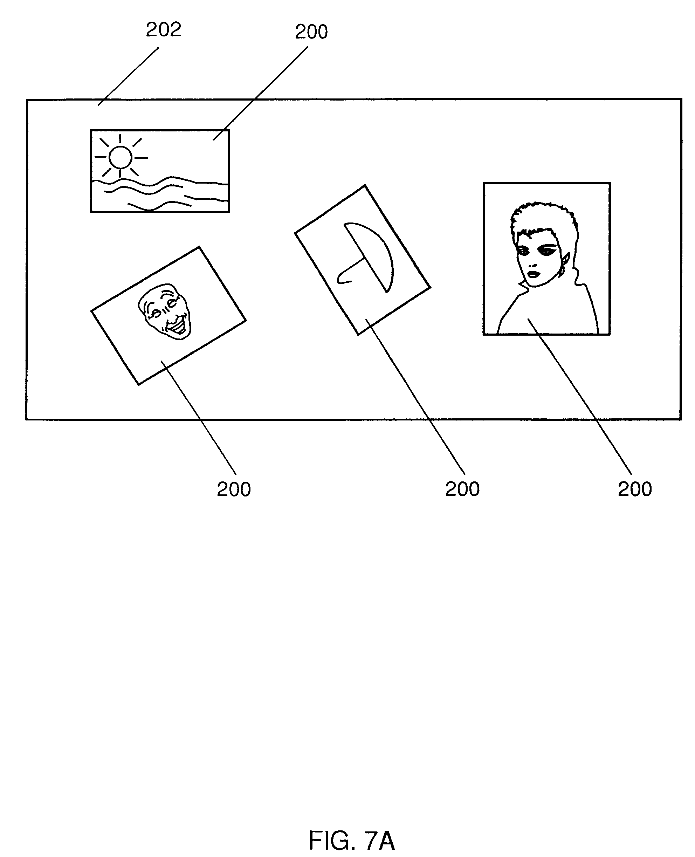

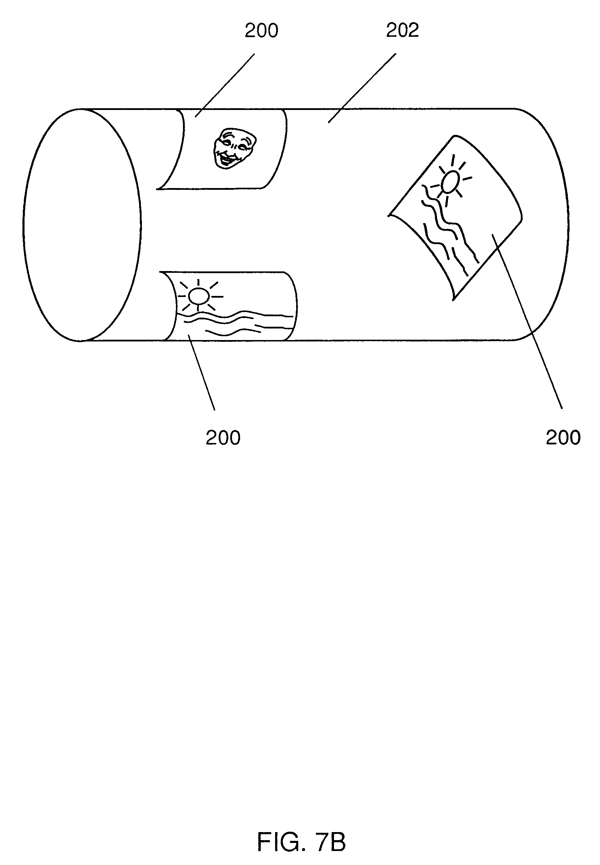

Reference is now made to Figs. 7 - 11 which illustrate an alternative embodiment of the present invention, providing a method and apparatus for scanning a plurality of input media placed on a scanning surface and for automatically determining their location and size.

The alternative embodiment is operative with any scanner, such as the Smart Scanner, which permits scanning of a multiplicity of input media 200 placed on the scanning surface 202 of the scanner. Figs. 7A and 7B illustrate the scanning surface 202 and input media placed thereon for flat bed and drum scanners, respectively.

In accordance with the alternative embodiment of the present invention, the scanner first performs a low resolution pre-scan of the scanning surface, or a user-determined portion thereof, and the digital data received is processed by host computer 104 to determine the location of each input medium 202.

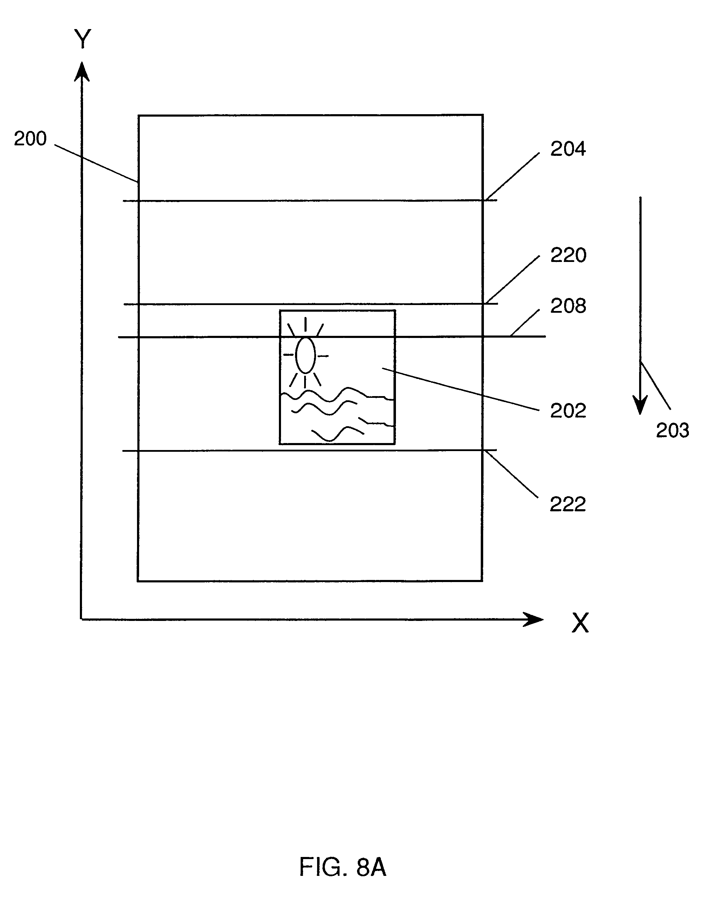

As the scanner scans the scanning surface, its output intensity signal changes in accordance with what it detects on the scanning surface. The scanner typically scans a scan line horizontally (in the scanning or x direction) and moves vertically (in the cross-scanning or y direction), marked by an arrow 203 (Fig. 8A), between scan lines.

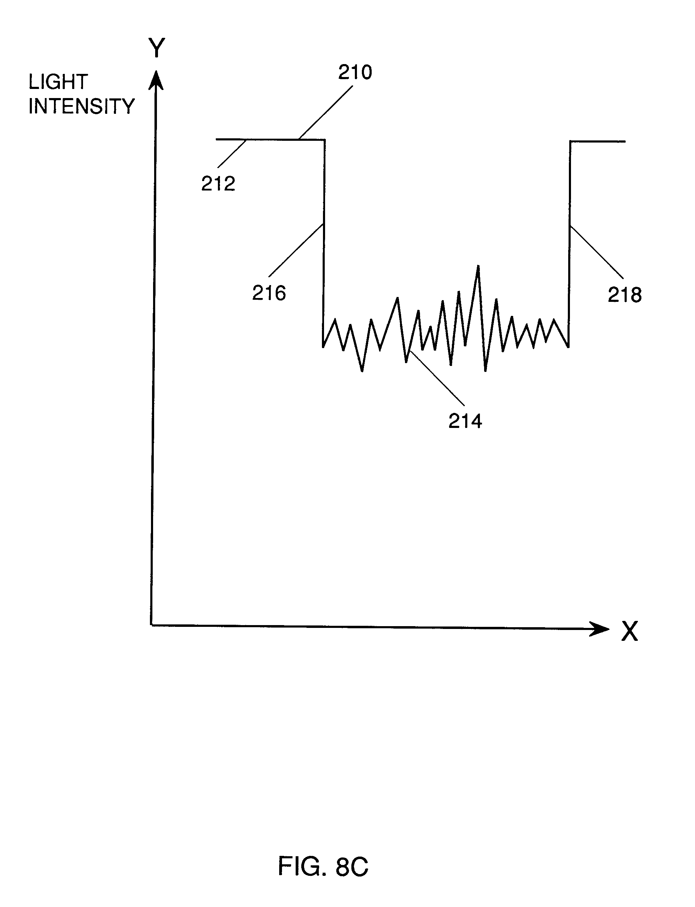

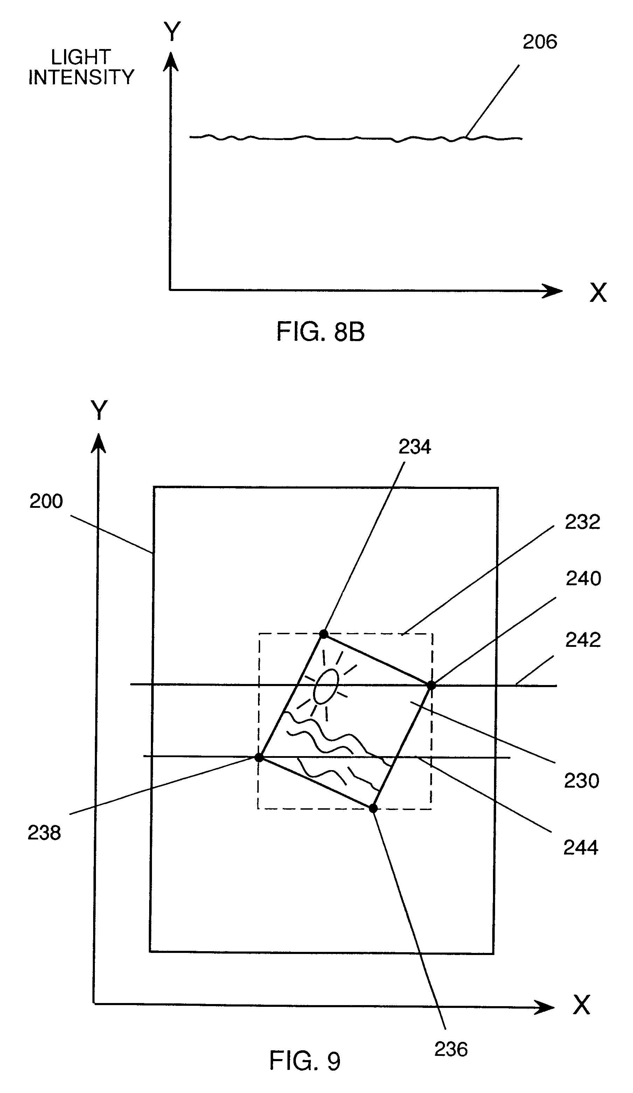

Thus, a scan line 204 which does not scan an input medium 202, produces an output signal 206 (Fig. 8B) which is relatively constant, if not somewhat noisy. A scan line 208, on the other hand, which scans across a portion of input medium 202, produces an output signal 210 (Fig. 8C), having a portion 212 similar to output signal 206, denoting a lack of an input medium, and a portion 214, having a much smaller intensity than that of portion 212, indicating the presence of the input medium.

When the scanner begins and finishes scanning over input medium 202, the output signal 210 abruptly changes to and from the much smaller intensity. A falling edge 216 and a rising edge 218 respectively indicate the leftmost and rightmost boundaries of the input medium 202. For the vertically placed input medium shown in Fig. 8A, the upper and lower boundaries are determined by the first and last scan lines which have a portion 214. The scan lines labeled 220 and 222 are those just above and below the medium 202.

The approximate size and location of the medium 202 are determined by the x and y values measured in each scan. When medium 202 is rescanned, for whatever purpose, the scanning area is slightly larger than the area indicated by the x and y values of each scan.

Fig. 9 illustrates a single input medium, labeled 230, mounted at an angle on scanning surface 200. In order to detect the entire input medium 230, a rectangle 232 must be scanned. While the uppermost and lowermost limits 234 and 236, respectively, are detected as described hereinabove with respect to Figs. 8A - 8C, the leftmost and rightmost limits 238 and 240, respectively, are detected by comparing the detected leftmost and rightmost boundaries of a given row with those of the previous rows and selecting the ones which are more left and more right, respectively. The scan lines 242 and 244 produce the rightmost and leftmost boundaries for medium 230.

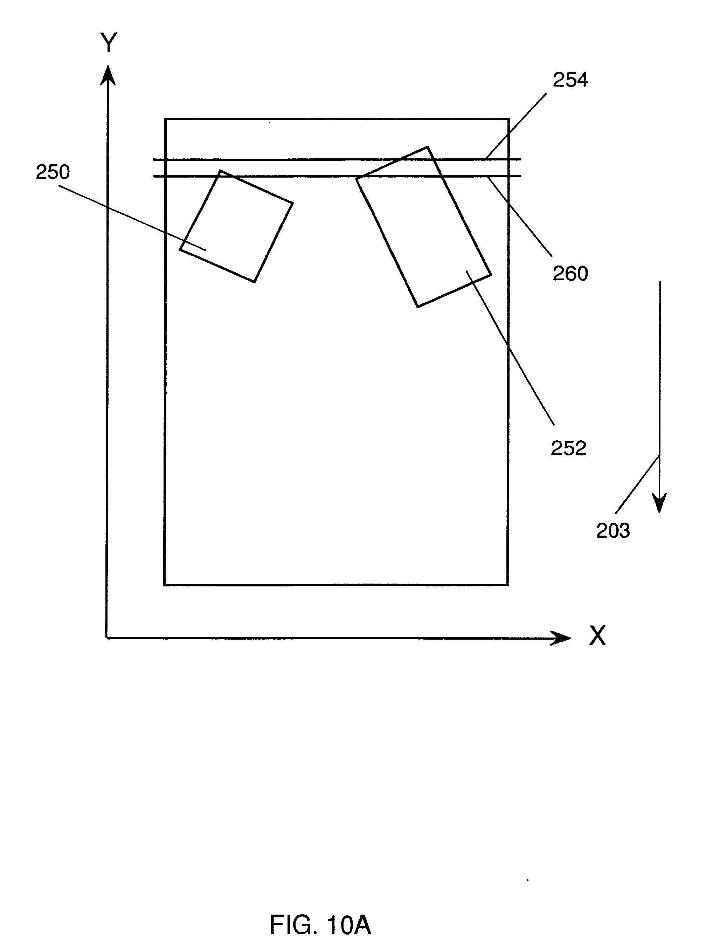

Figs. 10A - 10C illustrate the operation of the alternative embodiment of the present invention for multiple input media 250 and 252. The multiple input media 250 and 252 are shown at angles to the scanning direction. The size and location of each medium must be separately calculated.

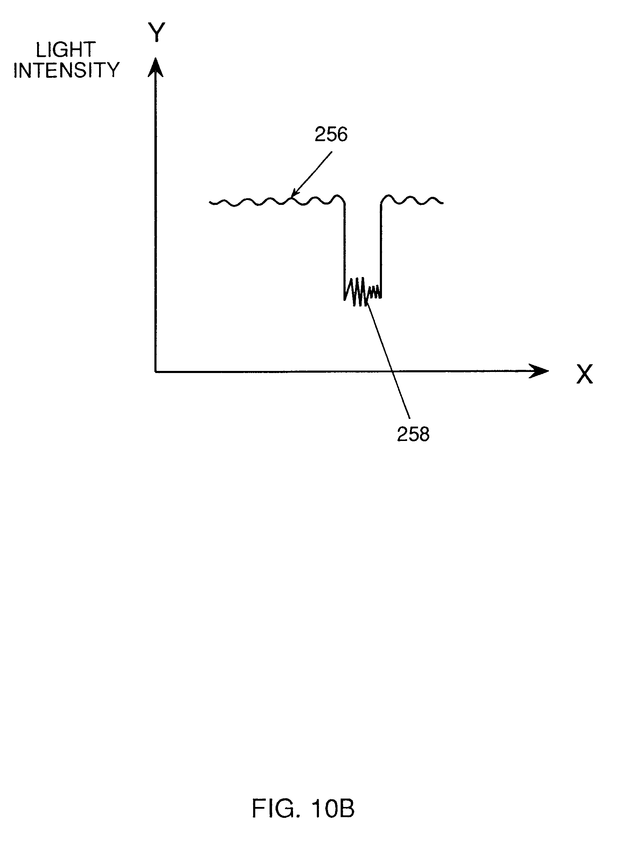

For the placement shown in Fig. 10A, the first scan lines, such as scan line 254, scan medium 252 only. The output 256 corresponding to the first scan lines, as shown in Fig. 10B, have only one continuous low intensity segment 258, from which, as described hereinabove, the left and right boundaries are determined.

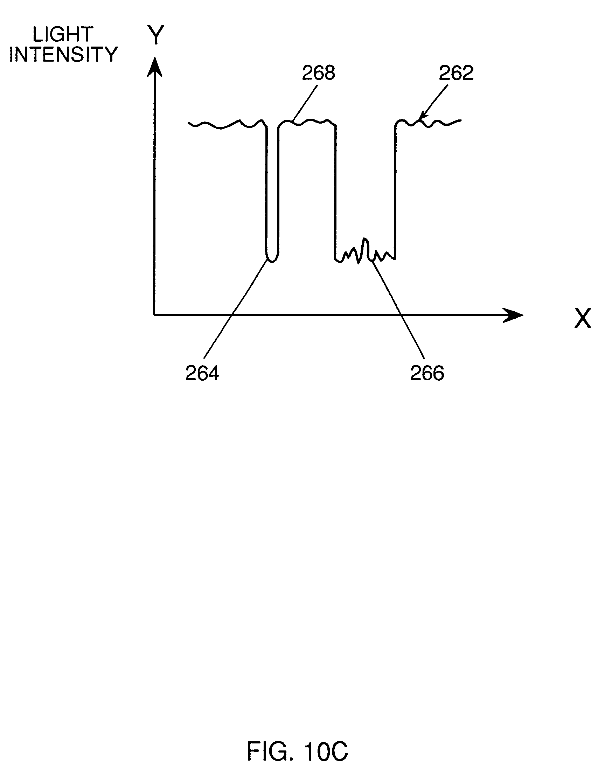

Other, later, scan lines, such as scan line 260, cross both media 250 and 252. The output 262 for scan line 260 is shown in Fig. 10C and has two continuous segments 264 and 266 with a segment 268 therebetween having a relatively constant light intensity at the intensity level corresponding to a clear scanning location.

Based on its location, segment 266 is associated with segment 258. If segment 264 is the first such segment, it is associated with a new medium. The scanning rectangles for each input medium 250 and 254 are determined separately, from the entirety of corresponding scan lines which detect the media. The locations of the rectangles are determined in accordance with the method described hereinabove.

It will be appreciated that after scanning for the location of the input media, the scanner 10 typically performs low resolution prescans of those input media selected by the user. As in the previous embodiment, the user views a prescan primarily for modification purposes, performing the modifications on the image of one input medium while prescans of other input media occur.

After modifications, the operator indicates that a final, full resolution scan is desired. The scanner then utilizes the location and size information determined previously in order to scan only the desired input medium. In contrast to the prior art, in the present invention, the user provides the input medium to the scanner 10 once, for both prescanning and final, full resolution scanning, even if another input medium is scanned in between.

The apparatus 99 (Fig. 5) and host computer 104 are utilized to perform the operations described hereinabove. The apparatus 99 performs the initial scan and the host computer 104 determines, from the initial scan output, the location and size of each input medium.

The scanner 10, with apparatus 99, utilizes the location and size information to perform the pre- and final scans. As in the previous embodiment, the apparatus 99 enables the entirety of the scanning operations to occur in the background.

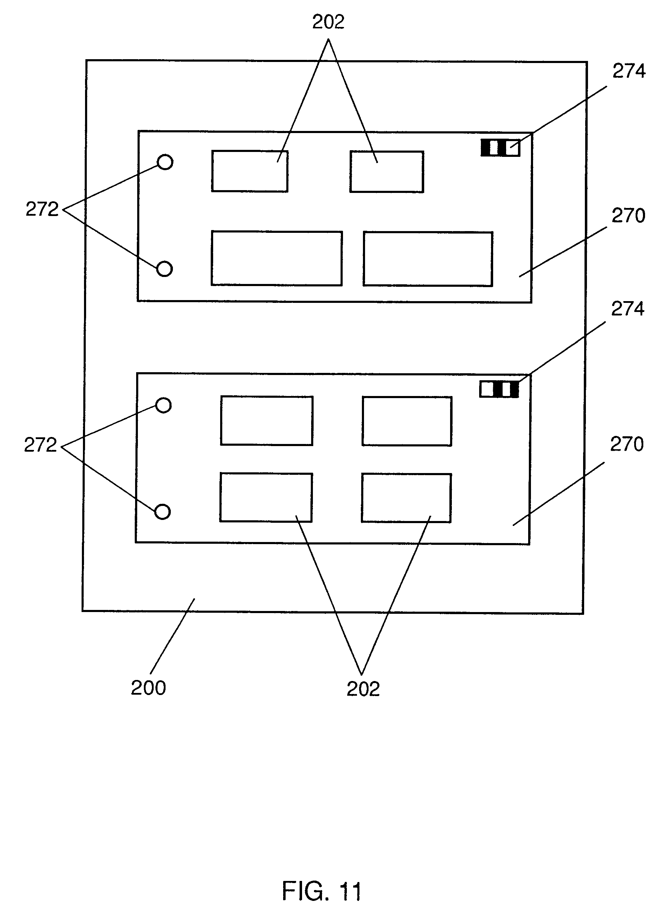

It will be appreciated that the method of the alternative embodiment can be performed when the locations of the input media are approximately known, as is the case when the input media are placed on jobsheets 270 (Fig. 11) having holes the size of input media located in known locations. Fig. 11 illustrates two jobsheets 270 each one operative for different formats of input media.

Jobsheets 270 typically hold a plurality of input media 202 of varying sizes and shapes in predetermined locations. They typically also have registration holes 272 by which the jobsheets 270 are generally repeatably locatable on scanning surface 200.

Optionally, jobsheets 270 can additionally comprise a bar code 274 indicating the type of jobsheet and, in turn, indicating the locations of the input media on the jobsheet.

Although the jobsheets 270 are operative to provide the input media in predetermined locations, for a variety of reasons, the input media 202 may be only approximately in the predetermined location. The method described hereinabove can be utilized to determine the precise location of each input media 202. The scanner 10 begins scanning near the approximate location and the data received is used to determine the precise location.

It will be appreciated that a plurality of input media can be selected and loaded into a scanner as a group. The scanner of this embodiment chooses the group of input media by loading an indicated cassette, in a manner similar to that described hereinabove with reference to Figs. 1 - 6. The scanner than selects an input medium to be scanned, from among those in the group, as described hereinabove with respect to Figs. 7 - 11.

The input media can be placed within the cassette either independently or in a specified arrangement such as provided by jobsheets 270.

It will be appreciated by persons skilled in the art that the present invention is not limited to what has been particularly shown and described hereinabove. Rather the scope of the present invention is defined only by the claims which follow:

## Claims

1. Apparatus for sequentially providing a scanner, having a scanning location, with a plurality of cassettes, the apparatus comprising:
means for storing said plurality of cassettes in designated locations; and
means for moving a desired cassette between its designated location in said means for storing and said scanning location of said scanner.

2. Apparatus for automatically scanning a plurality of input media, the apparatus comprising:
a scanner having a scanning location;
means for storing a plurality of cassettes in designated locations, wherein one of said plurality of input media is located within each cassette; and
means for moving a desired cassette between its designated location in said means for storing and said scanning location of said scanner,
wherein said scanner scans said input medium when said cassette is located in said scanning location.

3. Apparatus for scanning while performing image modification, the apparatus comprising:
a scanner for scanning at least a first input medium and for producing a first digital representation thereof, said first input medium being one of a plurality of input media;
means for storing said first digital representation along with other previously scanned digital representations;
means for modifying at least said first digital representation while said scanner scans a second one of said plurality of input media; and
control means for controlling said scanner, including indicating to said scanner to rescan said first input medium after said second input medium was scanned, without requiring a user, at the time of the rescan, to manually provide said first input medium to said scanner.

4. Apparatus for scanning more than one input medium mounted on a scanning surface, the apparatus comprising:
a scanner for scanning at least a portion of said scanning surface; and
a processor for automatically determining a location and size of those input media mounted within said portion of said scanning surface,
said scanner being operative to produce digital representations of said input media.

5. A method for scanning while performing image modification, the method comprising the steps of:
scanning at least a first input medium with a scanner and producing digital representations thereof, said first input medium being one of a plurality of input media;
storing said first digital representation along with other previously scanned digital representations;
modifying said at least first digital representation while said scanner scans a second one of said plurality of input media; and
indicating to said scanner to rescan said first input medium after said second input medium was scanned, without requiring a user, at the time of the rescan, to manually provide said first input medium to said scanner.

6. A method for scanning more than one input medium mounted on a scanning surface, the method comprising the steps of:
scanning at least a portion of said scanning surface; and
automatically determining a location and size of those input media mounted within said portion of said scanning surface and for producing digital representations thereof.

7. Apparatus for scanning utilizable by more than one user, the apparatus comprising:
means for storing a plurality of input media;
means for identifying said means for storing as storing input media of a predetermined user;
scanning means for scanning a single input medium; and
means for providing said single input medium to and from said scanning means.

8. A cassette for holding a picture to be scanned by a scanner, the cassette comprising:
a housing; and
means for identifying size and type of said picture and whether or not rotation of said picture, within said scanner, is desired.
